# EUROPEAN PATENT APPLICATION

(11) **EP 2 913 279 A1**
(43) Date of publication of application: **02.09.2015**
(21) Application number: 12886966.6
(22) Date of filing: 26.10.2012
(51) Int. Cl.: B65D 65/40, B32B 27/10, B32B 27/32, C08L 23/10, B29C 47/00, D21H 27/30

(54) **FILM-COATED PAPER AND MANUFACTURING METHOD THEREOF**

(71) Applicant: Chang, Kai-yu, Taichung City (TW)
(72) Inventor: Chang, Kai-yu, Taichung City (TW)
(74) Representative: Lang, Christian
(86) International application number: PCT/CN2012/083548
(87) International publication number: WO 2014/063338

(57) **Abstract**

The method for manufacturing film-coated paper includes steps including heating and melting an original raw material composed of PP and PE and re-granulating into a second raw material, mixing a first raw material and the second raw material followed by heating, melting, and mixing again wherein the first material is PP, re-granulating the mixed material, heating and melting the re-granulated material, extruding to form a coating film, and coating the coating film on a paper surface. Thereby, a film-coated paper which can resist higher temperature and has better yield rate is provided.

## Description

### BACKGROUND OF THE INVENTION

### Field of the Invention

The present invention relates to a method for manufacturing film-coated paper and a film-coated paper.

### Description of the Prior Art

Paper of food container is usually coated with a plastic coating film to prevent it from being soaked by fluid. A conventional coating film is composed of polyethylene which has an excellent flowability so as to be easily spread over the paper surface. However, polyethylene can bear the temperature of only 60 Celsius degrees. Thus, the coating film may be decomposed to release toxins when containing hot drink. In addition, to prevent the coating film from being composed, the paper container having coating film composed of polyethylene is unable to be heated by microwave oven.

To overcome the shortcomings mentioned above, some paper containers are coated with polypropylene film which is able to bear a temperature of 135 Celsius degrees. Thus, the paper containers are adapted for containing hot drink and are able to be heated by microwave oven. However, polypropylene has a poor flowability so that the coating film may solidify quickly during spreading over the paper surface. Thus, it is difficult to spread the coating film evenly, and more coating film is necessary to cover the whole paper surface. Also, the quickly solidifying coating film decreases the yield rate. In addition, weight of the coated paper is increased.

### SUMMARY OF THE INVENTION

The main object of the present invention is to provide a method for manufacturing film-coated paper and a film-coated paper in order to improve the performance of heat-resistance, the yield rate, and the quality of product.

To achieve the above and other objects, a manufacturing method of film-coated paper of the present invention includes the following steps:
(a) Blending an original raw material composed of polypropylene and polyethylene by heating and stirring the original raw material, re-granulating the original raw material to form a second raw material;
(b) Mixing polypropylene as a first raw material with the second raw material, heating, melting, and stirring the first raw material and the second raw material;
(c) Re-granulating a stirred material formed in step (b);
(d) Heating and melting a re-granulated material formed in step (c);
(e) Using an extruder to extrude a melted material formed in step (d) to form a coating film; and
(f) Coating the coating film on a surface of a paper;wherein the original raw material in step (a) is composed of 80-90% of polypropylene by weight and 10-20% of polyethylene by weight, a ratio of the first raw material to the second raw material in step (b) is 80-92 to 8-20.

To achieve the above and other objects, a filmed-coated paper of the present invention includes a paper and a coating film coated on a surface of the paper. An original raw material is blended and re-granulated to form a second raw material. The second raw material is mixed, heated, and melted with a first raw material. The melted first raw material and the second raw material are extruded by an extruder to form the coating film. The first raw material is polypropylene, and the original raw material is composed of polypropylene and polyethylene. The original raw material is composed of 80-90% of polypropylene by weight and 10-20% of polyethylene by weight, and a ratio of the first raw material to the second raw material is 80-92 to 8-20.

As a result, the film-coated paper is able to bear higher temperature so as to contain hot drink. In addition, the coating film has a better flowability so as to be easily spread over the whole surface of paper. Thus, yield rate is improved.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

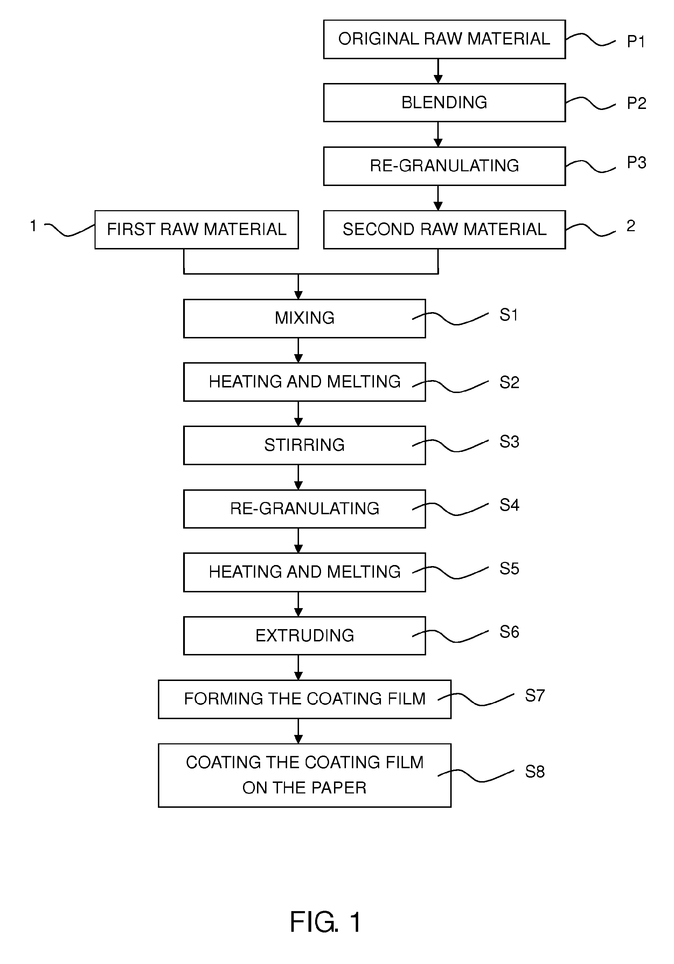

Fig. 1 is a flow diagram of the present invention.

### DETAILED DESCRIPTION OF THE PREFERRED EMBODIMENTS

Please refer to Fig. 1, the manufacturing method of the present invention includes the follow steps:
(a) Blending P2 an original raw material P1 composed of polypropylene and polyethylene by heating and stirring the original raw material P1, re-granulating the original raw material P1 to form a second raw material 2.
(b) Mixing S1 polypropylene as a first raw material 1 with the second raw material 2, heating, melting S2, and stirring S3 the first raw material 1 and the second raw material 2.
(c) Re-granulating S4 a stirred material formed in step (b).
(d) Heating and melting S5 a re-granulated material formed in step (c).
(e) Using an extruder to extrude S6 a melted material formed in step (d) to form a coating film S7.
(f) Coating S8 the coating film on a surface of a paper.

Specifically, the original raw material P1 in step (a) is composed of 80-90% of polypropylene by weight and 10-20% of polyethylene by weight, and a ratio of the first raw material 1 to the second raw material 2 in step (b) is 80-92 to 8-20.

The present invention also provides a filmed-coated paper including a paper and a coating film coated on a surface of the paper. Specifically, an original raw material is blended and re-granulated to form a second raw material. The second raw material is mixed, heated, and melted with a first raw material. The melted first raw material and the second raw material are extruded by an extruder to form the coating film. The first raw material is polypropylene, and the original raw material is composed of polypropylene and polyethylene. The original raw material is composed of 80-90% of polypropylene by weight and 10-20% of polyethylene by weight, and a ratio of the first raw material to the second raw material is 80-92 to 8-20.

Due to the step (a), the second raw material can be evenly formed from the original raw material. Further due to the step (b) and (c), granule structure can be formed evenly from the first raw material and the second raw material. Besides, the flowability (Melt Flow Index, MI) of the coating film is improved due to the second raw material. Thus, the coating film can be spread over the paper surface easily and evenly, so the quality of the coated paper is improved. In addition, the coating film can bear higher temperature to contain hot drink without releasing toxins.

Generally, polyethylene is unable to be blended with polypropylene well. Thus, the two-step blending in a specific ratio of the present invention helps polyethylene and polypropylene be mixed evenly. As a result, the flowability of the coating film I increased. In addition, the coating film is composed of little polyethylene so that the risk of releasing toxins is decreased.

## Claims

1. A manufacturing method of film-coated paper includes steps:
(a) blending (P2) an original raw material (P1) composed of polypropylene and polyethylene by heating and stirring the original raw material (P1), re-granulating (P3) the original raw material (P1) to form a second raw material (2);
(b) mixing (S1) polypropylene as a first raw material (1) with the second raw material (2), heating, melting (S2), and stirring (S3) the first raw material (1) and the second raw material (2);
(c) re-granulating (S4) a stirred material formed in step (b);
(d) heating and melting (S5) a re-granulated material formed in step (c);
(e) using an extruder to extrude (S6) a melted material formed in step (d) to form a coating film (S7); and
(f) coating the coating film (S8) on a surface of a paper;
wherein the original raw material in step (a) is composed of 80-90% of polypropylene by weight and 10-20% of polyethylene by weight, a ratio of the first raw material to the second raw material in step (b) is 80-92 to 8-20.

2. A filmed-coated paper including a paper and a coating film coated on a surface of the paper, wherein an original raw material is blended and re-granulated to form a second raw material, the second raw material is mixed, heated, and melted with a first raw material, the melted first raw material and the second raw material are extruded by an extruder to form the coating film, the first raw material is polypropylene, the original raw material is composed of polypropylene and polyethylene;
wherein the original raw material is composed of 80-90% of polypropylene by weight and 10-20% of polyethylene by weight, a ratio of the first raw material to the second raw material is 80-92 to 8-20.
